# EUROPEAN PATENT SPECIFICATION

(11) **EP 0 602 953 B1**
(45) Date of publication and mention of the grant of the patent: **08.10.1997**
(21) Application number: 93310131.3
(22) Date of filing: 15.12.1993
(51) Int. Cl.: A23L 3/16, A23L 3/3508, B65B 55/14, A23L 1/16, A23L 1/182, A23L 3/10

(54) **Cooked and packaged starchy foodstuffs**
Gekochte und verpackte stärkehaltige Nahrungsmittel
Denrées alimentaires cuites et emballées contenant de l'amidon

(30) Priority: 15.12.1992 US 991454
(43) Date of publication of application: 22.06.1994
(73) Proprietor: Borden Foods Corporation, Columbus, Ohio 43215 (US)
(72) Inventor: Lee, Yanien, Manlius, New York (US); Merrit, Carleton George, Phoenix, New York (US); Gillmore, Stephen Russel, New York 13140 (US); Dermody, Nancy Elizabeth, Camillus, New York (US)
(74) Representative: Wilkinson, Stephen John

(56) References cited:
- EP-A- 0 322 996
- EP-A- 0 415 787
- FR-A- 2 130 906
- GB-A- 1 500 335
- US-A- 4 659 576

## Description

### BACKGROUND OF THE INVENTION:

### Field of the Invention

This invention is directed to packaged fully cooked meals which are preserved against microbiological spoilage, methods for producing such packaged meals, and the ready-to-eat meals that may be so packaged. More particularly, this invention is directed to packaged fully cooked, starchy foodstuffs which are stabilized against spoilage at room temperature by reducing the pH to acidic levels.

### Background of the Invention

Reducing the pH of food products by the addition of an edible acid to preserve against microbiological spoilage is well known. Such a method for preserving food is often referred to as "pickling" or "acid preservation". This method of preservation is common for uncooked foods such as olives, cucumbers, peppers and other raw vegetables. This method is well suited for foods where a tart flavor is desired, such as pickles, salad dressings, relishes and the like.

The preservation of starchy foodstuffs by the addition of an edible acid has been accomplished. Although enhanced shelf-stability is obtained, there are drawbacks. Foodstuffs so preserved exhibit a tart, sour taste due to the presence of the acid. This is acceptable for some food preparations such as cold pasta and potato salads with dressings having an acidic pH. It is recognized that to expand the versatility of acid-preserved starchy foodstuffs, the sour taste contributed by the acid used must be avoided.

For example, Tiberio et al., U.S. Patent 4,477,478, teaches the use of fumaric acid in combination with acetic acid to preserve dressings for salad having a lower perceived tartness. In addition, Saitoh et al., U.S. Patent 4,552,772, disclose the use of salt with citric or lactic acid to improve the palatability of cooked, acid-preserved, wheat flour based, alimentary pastes. Although an improvement in taste is alleged, Saitoh et al. admit the product exhibits a detectable sourness, although weakened, at column 4, line 15 of the patent.

U.S. 4,734,291 teaches the use of encapsulated sodium bicarbonate in a packaged blanched starch foodstuff.

EP-A-0415787 discloses shelf-stable, acid-pasteurised rice which is produced by cooking the rice in the presence of a polymeric, food acceptable acid.

It remains desirable to provide an acid-preservation system for cooked starchy foodstuffs, particularly alimentary pastes, rice and potatoes, while avoiding, minimizing or overcoming the sour taste of the acid utilized and providing a good texture in the product.

### SUMMARY OF THE INVENTION

There is provided by this invention (1) a process for preparing a preserved, packaged pasta or rice foodstuff; and (2) a fully cooked foodstuff that is adapted to be packaged in a container for storage.

In one embodiment, the present invention provides a process for preparing a preserved, packaged pasta or rice foodstuff characterized by inhibited microbiological spoilage comprising the sequential steps of heating said foodstuff in its raw uncooked state at a temperature of at least 180°F (82°C) to cook said foodstuff fully and render it edible, then applying to said cooked foodstuff a quantity of an aqueous solution of an edible acid while maintaining said foodstuff at a temperature of at least about 180°F (82°C), said quantity of said aqueous acid solution being sufficient to produce a pH of said cooked acidified foodstuff in the range from 3.5 to 4.6, as determined by placing a 50g sample of said acidified cooked foodstuff and 50g of distilled water in a Waring or other intimate blender to form a puree, then observing the pH of said puree, then optionally coating said foodstuff with edible oil, and then sealing said acidified foodstuff in an oxygen-barrier package, whereby a shelf-stable cooked foodstuff is obtained as a packaged product that, when the package is opened, is cooked and edible.

In another embodiment, the invention provides a fully cooked foodstuff that is adapted to be packaged in an oxygen-barrier container for storage, wherein said foodstuff is characterized by inhibited microbiological spoilage, consisting essentially of a fully cooked, edible, starchy foodstuff selected from the group consisting of rice and alimentary pastes from wheat or rice, said fully cooked foodstuff having applied thereto, after being fully cooked, and while being maintained at a temperature of at least 180°F (82.2°C), a sufficient amount of an aqueous solution of an edible acid to lower the pH of said foodstuff to fall within the range from 3.5 to 4.6 as determined by placing a 50g sample of said acidified foodstuff, together with 50g of distilled water, in a Waring or other intimate blender to form a puree, then measuring the pH of the puree, wherein said fully cooked, acidified foodstuff optionally is coated with an edible oil.

The process of this invention for producing a packaged, shelf-stable, fully cooked, starchy roodstuff comprises first preparing a starchy foodstuff for packaging by:
(a) heating the starchy foodstuff in boiling water, steam or combinations thereof until fully cooked, the quantity of water/steam being sufficient to provide the desired moisture level in the starchy foodstuff,
(b) adding a quantity of an edible acid to the fully cooked, starchy foodstuff sufficient to provide shelf-stability, wherein said edible acid preferably provides a pH for the starchy foodstuff in the range of about 3.5 to about 4.6,
(c) mixing the edible acid and fully cooked, starchy foodstuff to distribute the edible acid on the foodstuff, and
(d) mixing an edible lubricant with the mixture of edible acid and starchy foodstuff, wherein the edible lubricant has a melting point below about 95°F (35°C) and is used in a quantity up to about 15% by weight, based on the weight of the total package contents.
A container is then filled with the thus prepared starchy foodstuff, sealed to exclude atmospheric oxygen and the contents of said container are then aseptically packaged, i.e., they are sterilized or pasteurized once packaged or are maintained under sterile or pasteurized conditions during packaging. The container isolates its contents from atmospheric oxygen and is resistant to wet heat at a temperature above about 180°F (82°C). "Wet heat" refers to the condition of high temperatures (above about 180°F) and high humidity (above about 85% RH). Such conditions are present within a steam tunnel or within a vessel of boiling water.

### DETAILED DESCRIPTION OF THE PREFERRED EMBODIMENTS:

The starchy foodstuffs suitable for use in this invention include grains, potatoes, starchy legumes and alimentary pastes. Preferably, the starchy foodstuff has a porous surface and is selected from grains, alimentary pastes and potatoes. Examples of preferred grains include rice, barley and wheat. The starchy foodstuffs used in the present invention must be in an edible state, prepared for consumption by the removal of any hard, inedible shell by peeling, pearling or other means. Of the grains, rice is most preferred.

Of the alimentary pastes, virtually any paste obtained from a glutinous flour is suitable for use in the embodiments of this invention. Examples of suitable glutinous flours include semolina flour, durum wheat flour, corn flour, buckwheat flour, farina flour and whole wheat flour. Their pastes all exhibit porous surfaces. Pastes obtained from rice flour, a nonglutinous flour, are also suitable, especially if the starch is gelatinized or partially gelatinized.

Potatoes that have been cut and/or peeled so as to expose porous surfaces are suitable for use. Any variety of potato may be used in the present invention.

The starchy foodstuff used is fully cooked so that it may be eaten as is from its container directly off the shelf or heated to the desired temperature. Heating the starchy foodstuff to cause it to absorb additional moisture, gelatinize additional starch, or denature additional protein is not required. Each of these phenomena may occur upon heating, but is of no consequence to this invention.

When fully cooked, alimentary pastes generally have a moisture content of about 65% to 85% by weight. Fully cooked rice generally has a moisture content of from about 60% to about 70% by weight and fully cooked potatoes generally have a moisture content of about 70% to 80% by weight. These values for moisture levels are provided as guides only. The fully cooked, starchy foodstuffs used in the present invention are not limited to species having these moisture levels.

The packaged starchy foodstuffs of the present invention are shelf-stable. The term "shelf-stable", as used herein, indicates that the foodstuff is stabilized against spoilage by microbiological growth at room temperature for a period of not less than 1 week. Preferably, the starchy foodstuffs are preserved against microbiological spoilage for a period of 6 months or more. To achieve shelf-stability, an edible acid is admixed with the starchy foodstuff. The pH of the starchy foodstuff is reduced to acidic levels of preferably from about 3.5 to about 4.6 with the edible acid.

Starch foodstuffs are not inherently acidic, so it is necessary to add an edible acid, i.e., one which can be ingested without harmful effect. Suitable acids include acetic acid, citric acid, tartaric acid, hydrochloric acid, malic acid, propionic acid, adipic acid, fumaric acid, phosphoric acid, lactic acid, sorbic acid, benzoic acid and mixtures thereof. Certain acids may be preferred because of their effectiveness. The quantity of edible acid added to the starchy foodstuff is preferably sufficient to provide a pH within the range described above. Most preferred pH values fall in the range of about 4.0 to 4.3.

To be effective, the edible acid is distributed in a substantially uniform manner so as to retard the growth of molds, bacteria and yeasts which cause spoilage. The acid may be diluted to aid distribution. It is preferable that the acid penetrate into the surface of the starchy foodstuffs, which is why porous starchy foodstuffs are preferred. For example, rice which has been acid preserved has been found to have a shelf life of more than 9 months at room temperature.

The package of a shelf-stable, fully cooked meal provided by one preferred embodiment of this invention comprises a primary container that serves to isolate a pasteurized food composition sealed therein from atmospheric oxygen. This preserved composition comprises a fully cooked, starchy foodstuff preserved with an edible acid. The edible acid is uniformly distributed within the preserved food composition and is preferably used in a quantity which provides a pH for the starchy foodstuff in the range of about 3.5 to about 4.6. This can be accomplished by adding and mixing a quantity of edible acid to the fully cooked, starchy foodstuff or by immersing the fully cooked, starchy foodstuff in a volume of diluted acid and weighing the volume of diluted acid both before and after immersion to determine the quantity of acid absorbed.

The preserved food composition may contain a mixture of fully cooked, starchy foodstuffs, shelf-stable foods other than starch foodstuffs, and other components such as vegetable oil for lubrication, water to aid acid dispersion, preservatives for added shelf life, seasonings or sauces for flavor, vitamin and mineral supplements, etc. The addition of these ingredients is optional.

The primary container must be comprised of a material having good oxygen barrier properties. Such materials include metals, glass, some synthetic resins, some resin coated papers or foils, and combinations thereof. Suitable containers include metal cans, glass jars, paper/metal foil pouches, some selected synthetic resin pouches, and suitably coated paper cartons. Metal cans or paper/foil pouches have high resistance to oxygen permeation, as do glass jars. However, such packages are undesirable for use in microwave ovens in that they reflect microwave energy. Synthetic resins generally do not reflect a significant amount of microwave energy and provide the advantage of convenience where the foodstuff is to be heated. However, synthetic resins generally have less desirable barrier properties to oxygen when compared to glass or metal.

Barrier properties of synthetic resins differ, and some resins must be modified to provide suitable barrier properties. Vapor barrier properties of synthetic resins can be enhanced by incorporating barrier resistant particles such as glass, minerals or metals in fiber, flake or particle form. Some synthetic resins are suitable without modification such as, for example, polyethylene terephthalate (medium and high density), polypropylene terephthalate (low density), polyvinylidene chloride (Saran), and polyamides.

Where a synthetic resin is selected for use in providing a container for the shelf-stable, fully cooked meal, the vapor barrier properties of the container may usually be enhanced by increasing the thickness of the container wall. The thickness of the wall for a container comprised of a synthetic resin preferably is in the range from about 2 mils to 5 mils. Such a container provides a reasonable resistance to puncture during handling and permits effective heat sealing of the pouch. Where the synthetic resin desired will not provide the desired barrier properties within this thickness range, thin layers of material with higher barrier properties can be added to help maintain the container thickness in this range. In a preferred embodiment, polyester pouches such as polyethylene terephthalate are used having a wall thickness of about 2 to 4 mils. Since polyethylene terephthalate has good oxygen barrier properties, it may also be used in a laminate with a base film layer that may be cheaper but is not a good oxygen barrier.

To isolate the preserved food composition from atmospheric oxygen, air must first be excluded prior to sealing the container. This can be accomplished by applying vacuum and/or compressing the container to evacuate air or by incorporating an inert atmosphere within the container such as nitrogen, carbon dioxide, or water vapor. Alternatively, water vapor may be generated from the container prior to and during sealing of said container so as to exclude a significant portion of atmospheric oxygen. A vacuum forms in the sealed container once the water vapor condenses upon cooling. Such a method is preferred in that it need not require a separate processing step where the contents of the container are sufficiently hot to generate adequate water vapor.

Other ingredients may be included in a second container provided these ingredients are shelf-stable. Such additional ingredients will more commonly be seasonings, such as, for example, salt, dehydrated cheese, dried bread crumbs, dried onions, dried chives and the like. Conventional preservatives such as propylene glycol, sodium benzoate, etc. may also be introduced.

The contents of the primary container must be pasteurized or sterile. This can be accomplished by maintaining the fully cooked, starchy foodstuff and other components under pasteurized conditions or sterile conditions until sealed within the primary container. Maintaining the fully cooked, starchy foodstuff at a temperature above about 180°F (82°C) until packaged will generally provide a pasteurized food composition. Higher temperatures are necessary to provide a sterile food composition. Alternatively, or in addition to maintaining the fully cooked, starchy foodstuff under pasteurized or sterile conditions, the contents of the primary container may be sterilized or pasteurized by any conventional means after sealing. For example, pasteurization can be achieved by heating the contents of the primary container to a temperature above about 180°F (82°C) by treatment of the sealed primary container with steam or boiling water. For sterilization, the contents are heated to a temperature of about 212°F (100°C) and above. Pasteurizing is preferred in that its effect on taste and texture of the food composition is minimized. Alternative methods of pasteurizing or sterilizing the contents of the primary container without radiant heat include treatment with microwave radiation and/or UV radiation.

A package of a shelf-stable, fully cooked meal will preferably have a shelf life greater than 1 month and more preferably will be shelf-stable for a period of at least about 6-9 months. It should be noted that a longer shelf life may be obtained by sterilizing the contents of the primary container, or by adding conventional food preservatives, such as, for example, propylene glycol, sodium benzoate and the like.

The starchy foodstuffs used in the ready-to-eat meals are preferably rice and alimentary pastes. The preferred edible acids are propionic acid and lactic acid.

It is important to note that the shelf-stable, fully cooked meal may contain other components such as sauces (cheese, egg/cream), vegetables, seasonings (salt, garlic, onion, chives), oils, foodstuffs other than the starchy foodstuffs selected above (mushrooms, meats, vegetables) which are common to ready-to-eat meals. In addition, this ready-to-eat meal may be heated, maintained at ambient temperature or chilled, where desired. The additional ingredients may be premixed with the fully cooked, starchy foodstuff.

The ready-to-eat meals provided by this invention may be obtained from a package of a shelf-stable, fully cooked meal provided by this invention and described above. However, it is important to note that these ready-to-eat meals may be obtained by utilizing components which are not packaged or are packaged by alternative means and methods.

A further embodiment of the present invention is directed to processes for producing packaged, shelf-stable, fully cooked, starchy foodstuffs. The starchy foodstuffs utilized in this process are those previously defined as preferred, i.e., those selected from the group consisting of alimentary pastes, grains and potatoes. Of this starchy foodstuffs, rice and alimentary pastes are most preferred.

The package produced by the process of the present invention contains an edible acid and an edible lubricant in addition to the starchy foodstuffs therein. Suitable edible acids are those as defined previously. Preferred edible acids include propionic acid and lactic acid.

The edible lubricant within the package produced by this process must have a melting point below about 95°F (35°C) to provide the desired function of preventing the fully cooked, starchy foodstuff from sticking and forming a solid mass. Preferably, below about 15% by weight edible lubricant is used, based on the total weight of the package contents. This weight limit prevents the finished product from becoming too greasy and unpalatable. Preferred quantities of edible oil generally range from about 1% to 8% by weight of the total package contents. Suitable edible lubricants include corn oil, unsaturated safflower oil, palm oil, olive oil, peanut oil, coconut oil, sunflower oil and solid fats such as butterfat.

The process of this invention comprises preparing a starchy foodstuff for packaging by heating it in boiling water, steam or combinations of both until it is fully cooked. Cooking the starchy foodstuff increases its moisture content and thereby increases its tenderness. The degree of tenderness for a fully cooked, starchy foodstuff varies, depending upon personal tastes. The term "fully cooked", as used herein, is intended to include all degrees of tenderness commonly desired for ready-to-eat starchy foodstuffs. For example, with respect to alimentary pastes, those pastes cooked to provide a soft surface texture and a hard, firm center commonly referred to as "aldente" are included within the term "fully cooked", as well as those pastes which are cooked to a soft texture throughout, providing maximum moisture levels and maximum tenderness.

The quantity of water and steam utilized to cook the starchy foodstuff must be sufficient to provide the desired tenderness. Excess quantities of water can be utilized. However, when excess water is used, the starchy foodstuff must be drained, often resulting in product loss. It is preferable to avoid draining the fully cooked, starchy food product.

To this fully cooked, starchy foodstuff is added an edible acid in a predetermined quantity sufficient to provide shelf-stability, said quantity preferably provides a pH having a value in the range of about 3.8 to about 4.6. Suitable quantities of acid generally range from about 0.01% to 1.5% by weight acid based on the weight of fully cooked, starchy foodstuff. The most preferred pH is one having a value of about 4.0 to 4.3.

The edible acid and fully cooked, starchy foodstuff are agitated so as to disperse the acid on the surface of the cooked foodstuff. The pH values for the starchy foodstuffs herein are determined by first mincing the starchy foodstuff, or a sample thereof, in distilled water to form a slurry or purée and then measuring the pH of the resultant slurry or purée. Adequate slurries can be obtained for 50gm samples of starch foodstuff with 50gm of distilled water from a Waring blender in operation for about 1 minute and longer. In obtaining the desired pH, porous foodstuffs such as rice, potatoes and alimentary pastes absorb the edible acid beneath their surfaces. This is a beneficial phenomenon in that it typically enhances shelf-stability.

Agitation of the edible acid and foodstuff is preferably sufficiently mild to preserve the integrity of the foodstuff's shape and form. It is undesirable to cut, grind or mince the foodstuff during agitation. Therefore, agitation equipment which provides the desired dispersion without damaging the shape of the foodstuff is preferred. Examples include ribbon type mixers, and the like. Where a ribbon mixer is used, agitation of from 1 to 3 minutes is suitable.

To the agitated acidified, fully cooked, starch foodstuff is added an edible lubricant in a quantity as described above. Agitation of the acidified, fully cooked, starch foodstuff and the edible lubricant is not essential; however, to obtain the most beneficial effect, agitation is preferred.

It should be recognized that further steps in preparing the starchy foodstuff for consumption are suitable, such as marination, frying, blending and seasoning, etc., provided these added treatments do not interfere with shelf-stability. Other components may be added if they are shelf-stable, such as food preservatives.

The starchy foodstuff thus prepared for packaging is sealed within a container so as to exclude atmospheric oxygen. The container must be resistant to wet heat in excess of 180°F (82°C) to permit subsequent processing and to accept the prepared starchy foodstuff when said foodstuff is hot from cooking. Those containers described above as suitable for packages of fully cooked meals provided by this invention are also suitable for use in the process described herein. Containers of glass, metal and synthetic resins are acceptable with preferred containers being comprised of synthetic resins, particularly polyesters (polyethylene terephthalate). As with the packages provided by this invention, the preferred thickness for these pouches ranges from about 2 mils to 4 mils.

Air must be excluded from the container prior to sealing. This can be accomplished by any conventional means such as applying vacuum or incorporating an inert atmosphere such as nitrogen, carbon dioxide or water vapor within the container. Generating a water vapor within the container is preferred in that a separate processing step is not needed where the prepared starchy foodstuff remains hot from the cooking steps.

The contents of the packages produced by the process herein are pasteurized or sterile. This condition may be achieved by exposing the contents to sterilization processes and/or pasteurization processes subsequent to sealing the container. For example, pasteurization can be accomplished by heat treatment of the sealed packages with steam vapor or by immersion in hot water at a temperature above about 180°F (82°C). By utilizing higher temperatures, sterilization is achieved. Alternative methods for providing a sterile or pasteurized condition include treatment with UV radiation and microwave radiation.

A convenient method for achieving a pasteurized sterile condition is to maintain the prepared starchy foodstuff under pasteurized/sterile conditions after cooking until- sealed in the container. Cooking the starchy foodstuff in boiling water, steam or combinations of both will pasteurize or sterilize it, depending on the temperature used. This condition can be retained by maintaining the foodstuff at a sufficiently high temperature after cooking until it has been sealed in an aseptic container. The preferred temperature range is about 180°F (82°C) to about 210°F (98°C), which provides a pasteurized condition. To insure against growth of microorganisms the contents of the aseptic container may be subjected to a pasteurization step or sterilization step after sealing.

The packaged, shelf-stable, fully cooked, starchy foodstuffs produced by the process of this invention will have a shelf life greater than 1 month and typically greater than 6 months. Shelf life may be extended by selecting particular acids, incorporating food preservatives within the fully cooked, starchy foodstuff, and/or by sterilizing the contents of the sealed package.

The following examples are provided to further illustrate the invention. In these examples and throughout the specification, all temperatures are expressed in degrees Fahrenheit and each value is accompanied by an approximation of such value in degrees Celsius. All pH values for the starchy foodstuff, described in the examples and the claims which follow are measured from slurries of 50 gm samples of these starchy foodstuffs with distilled water obtained after mincing the 50gm starchy foodstuff samples in a Waring blender for about one minute. In addition, all parts and percentages are by weight, unless expressly indicated to be otherwise.

### Examples 1-4

### Long Term Stability of Several Packaged, Cooked, Starchy Foodstuffs

These examples demonstrate the long term stability of packaged, fully cooked, starchy foodstuffs prepared in accordance with one preferred embodiment of the process of this invention. The packages produced were suitable for use in the ready-to-eat meals provided by this invention and also the packaged meals provided by this invention.

The starchy foodstuffs in Examples 1-4 were prepared by boiling in excess water until fully cooked. Rice was boiled for approximately 12 to 14 minutes to achieve a final moisture content of about 72% to 75% by weight. Elbow macaroni having a size of about 1" in length and 3/8" in diameter was boiled 6 to 7 minutes to achieve a final moisture content of about 68% to 72%. Egg noodles of 1 1/2" length and 1/16" thickness were boiled for 7 to 9 minutes to achieve a final moisture content of about 66% to about 70% by weight. The excess water was drained after these cooking times.

Edible acids diluted in water to an acid:water ratio of about 1:10 were then added to the fully cooked, starchy foodstuffs. For rice, about 0.9% by weight lactic acid and about 0.027% by weight propionic acid were added, based on the weight of starchy foodstuff. For elbow macaroni, about 1.0% by weight lactic acid and about 0.030% by weight propionic acid were added, based on the weight of starchy foodstuff. For the egg noodles, about 1.1% by weight lactic acid and about 0.033% by weight propionic acid were added, based on the weight of starchy foodstuff.

After the addition of acid, agitation of the components was accomplished within a ribbon-type mixer for 1 to 3 minutes. During mixing, corn oil was added in all examples to minimize sticking. To rice, about 8% by weight corn oil, based on the dry weight of rice, was added. For elbows, about 6% by weight corn oil was added, based on the dry weight of elbows, and for egg noodles, about 7% by weight corn oil was added, based on the dry weight of egg noodles. After the addition of corn oil, mixing continued in the ribbon mixer for about 1 to 3 minutes. The temperature of each starchy foodstuff was maintained above 180°F (82°C) in preparation for sealing within polyester pouches.

About 200g to about 250g of each of the starchy foodstuffs were filled in 6 1/2" by 8", 2 mil polyethylene terephthalate polyester pouches. These pouches were heat sealed and passed through a steam saturation tunnel to raise or maintain the internal temperature to about 180°F (82°C) or above within each pouch.

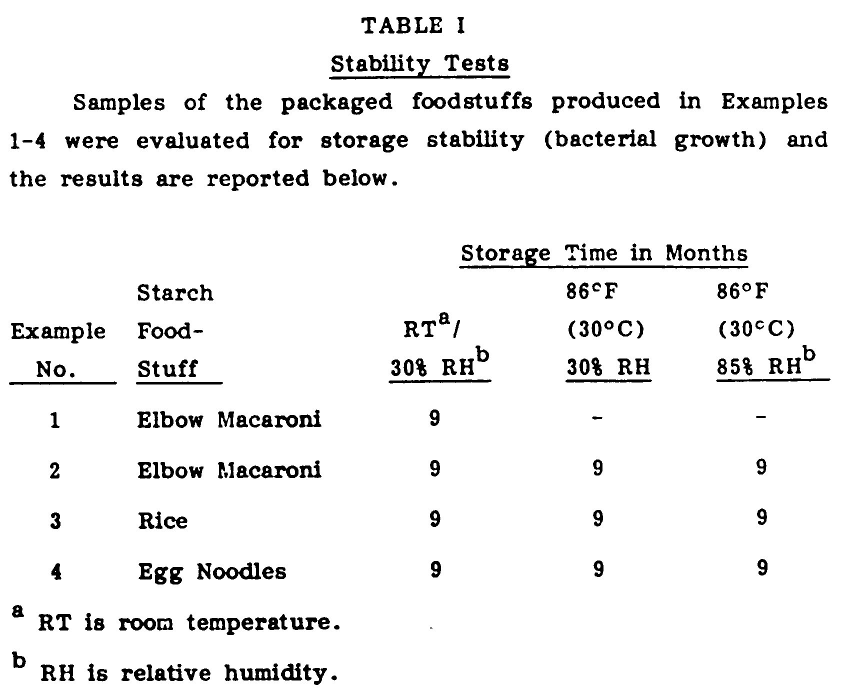

Bacterial growth was monitored over the course of 9 months. The total plate count for samples taken from Examples 2 and 3 above was found to decrease from 102 colonies to 80 colonies per gram after 8 weeks storage at 86°F(30°C), indicating microbiological growth was still inhibited at this time. The total plate count was acceptable after 9 months. The starchy foodstuffs were found to have the same acceptable flavor and texture after storage for 9 months as when first packaged. Beyond 9 months, microbiological spoilage was inhibited but taste, flavor and texture were found to deteriorate.

### Example 5

### Package of Acid/Rice Admixture Low End of the pH Range

This example demonstrates the stability of packages produced by this invention where the starchy foodstuff has a pH near the low end of the range of suitable values. Packages of fully cooked rice were produced by heating water (about 26.5 pounds) with about 200g oil to a boil in a jacketed kettle, adding rice (about 11 pounds par-boiled rice) and returning the water to a boil. After 12 minutes, the heat was turned off, the kettle covered, and the rice was allowed to stand in the hot water for about 3 minutes. The kettle was filled with more hot water and stirred with a spoon.

The excess water was drained and the cooked rice (about 29.5 pounds) was transferred to a ribbon mixer. A solution of diluted lactic acid (55g acid + 550g water) was added and mixed in the ribbon mixer followed by the addition of 600g corn oil. The oil and rice were mixed until the oil was uniformly dispersed.

About 59 pouches were each filled with about 220g to 230g of the rice/acid/oil mixture and sealed. The pouches were then heated in a steam chamber for about 9 minutes or until an internal temperature of at least 180°F (82°C) was reached. The pH of the rice in a sample pouch was found to be 3.62 utilizing the following procedure: a 50gm sample of rice was obtained from the pouch, blended with an equal amount of distilled water in a Waring blender for 1 minute and the pH of the resultant slurry was measured with a pH meter. Conventional pH meters such as a Corning pH meter and Beckman pH meter were used. To test for shelf stability, 4 bags were placed in 86°F(30°C)/85%RH for 1 week and no sign of microbiological growth was observed at the end of that time.

### Example 6

### Package of Acid/Rice Admixture High End of the pH Range

This example demonstrates the stability of packages produced by this invention where the starchy foodstuff has a pH near the high end of the range of suitable values. Packages of fully cooked rice were produced by heating 19.25 pounds of water with 200g corn oil in a Groen kettle to a boil and adding 11.0 pounds rice). After 9.5 minutes of boiling, the heat was turned off and the kettle covered. After an additional 6 minutes with no stirring, the rice was transferred to a Ribbon-Type Mixer. The rice was mixed with dilute acid (55g of 85% lactic acid + 300g water) and about 600g corn oil. Individual pouches were filled with 230±10g of the rice/oil/acid mixture. All pouches were heat treated for 9 minutes in a steam chamber. The heat treated pouches were exposed to 86°F 30°C/85%RH for about 1 week. The pH of the treated rice within a sample pouch was about 4.65, as measured by the procedure of Example 5. No spoilage was observed at the end of 1 week.

### Example 7

### Package of Acid/Rice Admixture Without a Sterilization or Pasteurization Step

This example demonstrates that a separate sterilization or pasteurization step is not necessary in the process of this invention if the starchy foodstuff is maintained pasteurized/sterile after cooking. Individual packages produced in accordance with Example 6 were exposed to 86°F(30°C)/85%RH for 1 week without heat treatment in a steam chamber. The pH of the treated rice within a sample pouch was about 4.20 after 1 week as measured by the procedure of Example 5. No spoilage resulted in these pouches.

### Example 8

### Physical Properties and Texture of the Product of the Invention

Four different preparations of spaghetti were made for comparison. Each of these preparations, when ready for consumption, was evaluated in an Instron test machine, to evaluate the texture of the pasta. For this purpose, 50 grams of the pasta was placed in a Kramer shear cell, and the machine was then operated to cause the head of the machine to penetrate the pasta in the Kramer shear cell to achieve complete penetration. The force in kilograms required to achieve complete penetration was then observed, as an indication of the texture of the pasta. In addition, an experienced and trained taste panel was then asked to evaluate each of the four differently prepared batches of spaghetti. The taste panel was asked to rate the spaghetti on a scale of 1, for poor, through 5, for excellent. Each individual graded separately, and the five grades were then converted to an arithmetic average. It is the average that is reported in the table in the accompanying declaration text. Each Istron reading, reported as a force in kilograms, is the reading actually observed.

### (i) Control

To provide a control for comparison, freshly extruded spaghetti at 30% moisture was cooked for 8 minutes in boiling water. It was then cooled to room temperature for the Instron measurement and for the taste panel evaluation. As reported in the Table, below, the Instron reading was 30.25 k/g, and the taste panel evaluation was 3.5. The panel rating of 3.5 indicates that the panel members generally were pleased with the product, and that its taste was not only acceptable, but quite good.

### (ii) Example 4 of U.S. 4,734,291 (Raffensperger)

Following the procedure of Example 4 of the Raffensperger patent, a pasta made of durum granular wheat was extruded in the form of spaghetti rods, having a moisture content of 30% by weight. The pasta rods, pre-weighed to 90 grams, were blanched by spraying with steam at atmospheric pressure to achieve a weight of 126 grams, as specified in Example 4 of Raffensperger's patent. The 126 grams of partially blanched pasta were then placed in a pouch. A solution, made up of 105 grams of water and 0.84 grams of fumaric acid, was then added to the pouch. Raffensperger teaches the use of encapsulated sodium bicarbonate in the pouch. Thus, 1.0 gram of Durkee 170-70 encapsulated sodium bicarbonate was then added to the pouch. The pouch was allowed to stand for 10 minutes for equilibration. The pH was measured with a pH meter, in contact with the liquid. The observed pH was 3.49. The pouch was then sealed and sterilized by placing it in a pressurized water bath at a temperature of about 220°F (104.4°C).

Since the release temperature of the encapsulated sodium bicarbonate is about 170°F (76.7°C), the sterilization step caused the release of the sodium bicarbonate into the interior of the pouch. The encapsulated sodium bicarbonate contained 70 percent by weight of sodium bicarbonate, and thus 0.7 grams of sodium bicarbonate were released.

The contents of the package were removed from the package and 50 grams of the pasta were placed in a Waring blender, along with 50 grams of distilled water. After blending for 4 minutes to form a puree, until there were no lumps or pieces, the pH of the puree was observed to be 4.89.

### (iii) The Present Invention - Fresh Pasta

The present invention initially cooks the foodstuff fully to render it edible, before it is mixed with the acid solution, and although the pasta is maintained at an elevated temperature of at least about 180°F while in contact with the acid, this is not a continuation of the cooking step. The product of the process of the present invention is shelf-stable because of its acidity, but the acid content does not lead to an undesirably acidic taste.

To demonstrate the present invention, fresh extruded spaghetti at 30% moisture content was cooked for 8.0 minutes in boiling water, drained, then acidified to pH 4.3 with an aqueous solution of lactic acid at 8.0% concentration. The acidified spaghetti was then coated with 2.0% vegetable oil, packed in a plastic, oxygen barrier pouch, and immersed in boiling water for 5.0 minutes to pasteurize the pouch and its contents. The pasta was then tested on the Instron by placing 50 grams of the pasta in a Kramer shear cell, and then causing the head of the Instron to penetrate the pasta. As reported in the table below, 23.75 kg of force were required. The taste panel evaluated the pasta, and rated it 2.5, which is acceptable. The results of the Instron tests indicate that the texture of the pasta was highly desirable. The taste panel members confirmed this, indicating that it was firm, rubbery, and chewy, and that when chewed, it tended to be resilient.

### (iv) The Present Invention - Dry Pasta

Finally, for further comparison, a commercially available dry spaghetti product, at 10% moisture, was cooked in boiling water for 12 minutes. It was then drained and acidified to pH 4.3 with a lactic acid aqueous solution at 8.0% concentration. The acidified spaghetti was then cooked with 2.0% vegetable oil, packed in a plastic pouch, and immersed for 5.0 minutes in boiling water, to pasteurize the package and its contents. 50 grams of the pasta were placed in a Kramer shear cell and tested on the Instron, producing a reading of 28.75 kg of force required for penetration. This indicated an excellent texture. The taste panel evaluation was 3.75, which was the highest rating noted by the panel in these tests. This final test demonstrates that the technique of completely cooking the pasta, prior to acidifying it, produces a superior product as to texture and taste.

The pasta was fully cooked to 65% moisture content in both demonstrations of the invention.

The Instron results and the taste panel results are reported in the table below in summary tabular fashion. In the case of the taste panel, the five members were experienced and highly trained individuals. Each had one rating, and the ratings reported in the table below are the arithmetic averages of all ratings, that is, one rating from each member of the taste panel.

**Table I**

| Summary of Observations | Instron Reading Kg Force/50 grams | Taste Panel (1-poor, 5 Excellent) |
|---|---|---|
| 1 - Control Fresh Extruded Spaghetti cooked in 8 minutes in boiling water | 30.25 | 3.5 |
| II - Product prepared according to Raffensperger patent U.S. Patent 4,734,291 | 11.5 | 1.0 |

| Product and process of the invention: | | |
|---|---|---|
| III - Fresh Extruded Spaghetti Cooked 8 minutes in boiling water, acidified, coated with oil and pasteurized | 23.75 | 2.5 |
| IV - Our process Dry Spaghetti Cooked 12 minutes in boiling water, acidified, coated with oil and pasteurized | 28.75 | 3.75 |

In summary, the products produced in accordance with the process of the present invention have been demonstrated to have superior physical properties and superior texture.

## Claims

1. A process for preparing a preserved, packaged pasta or rice foodstuff characterized by inhibited microbiological spoilage comprising the sequential steps of:
heating said foodstuff in its raw uncooked state at a temperature of at least 180°F (82°C) to cook said foodstuff fully and render it edible, then
applying to said cooked foodstuff a quantity of an aqueous solution of an edible acid while maintaining said foodstuff at a temperature of at least about 180°F (82°C), said quantity of said aqueous acid solution being sufficient to produce a pH of said cooked acidified foodstuff in the range from 3.5 to 4.6, as determined by placing a 50g sample of said acidified cooked foodstuff and 50g of distilled water in a Waring or other intimate blender to form a puree, then observing the pH of said puree, then
optionally coating said foodstuff with edible oil, and then
sealing said acidified foodstuff in an oxygen-barrier package,
whereby a shelf-stable cooked foodstuff is obtained as a packaged product that, when the package is opened, is cooked and edible.

2. The process of claim 1, wherein the amount of acid added to said cooked foodstuff is such as to adjust the pH of said hot acidified foodstuff to a value of 4.0 to 4.3.

3. The process of claim 1 including, as an additional step, that of heating the packaged cooked foodstuff for a time and at a temperature to sterilize the contents of said package.

4. The process of claim 1 comprising the added step of incorporating in said package an inert atmosphere comprising nitrogen.

5. A process of preparing an edible starchy foodstuff of pasta or rice that is characterized by inhibited microbiological spoilage, comprising the sequential steps of:
heating said foodstuff in its raw, uncooked state at a temperature of at least about 180°F (82°C) to fully cook said foodstuff and render it edible, then
applying to said cooked foodstuff an aqueous solution of an edible acid while maintaining said foodstuff at a temperature of at least about 180°F (82°C), whereby the pH of said hot acidified foodstuff is adjusted to be in the range from 3.5 to 4.6, as determined by placing a 50g sample of said acidified cooked foodstuff together with 50g of distilled water in a Waring or other intimate blender to form a puree, then measuring the pH of said puree, then
optionally coating said foodstuff with edible oil,
whereby a shelf-stable cooked foodstuff is obtained.

6. The process of claim 5, wherein the amount of said acid employed is sufficient to adjust the pH of said acidified foodstuff to be in the range from 4.3 to 4.6.

7. The process of claim 5, wherein said process includes the additional step of pasteurizing or sterilizing said acidified foodstuff by heating it at a temperature and for a sufficient time to sterilize it.

8. A fully cooked foodstuff that is adapted to be packaged in an oxygen-barrier container for storage, wherein said foodstuff is characterized by inhibited microbiological spoilage, consisting essentially of
a fully cooked, edible, starchy foodstuff selected from the group consisting of rice and alimentary pastes from wheat or rice,
said fully cooked foodstuff having applied thereto, after being fully cooked, and while being maintained at a temperature of at least 180°F (82.2°C), a sufficient amount of an aqueous solution of an edible acid to lower the pH of said foodstuff to fall within the range from 3.5 to 4.6 as determined by placing a 50g sample of said acidified foodstuff, together with 50g of distilled water, in a Waring or other intimate blender to form a puree, then measuring the pH of the puree,
wherein said fully cooked, acidified foodstuff optionally is coated with an edible oil.

9. The foodstuff of claim 8 that is sealed within a sterilized oxygen barrier package.

10. The packaged foodstuff of claim 9, wherein an inert atmosphere of nitrogen is sealed in said package.

11. The foodstuff of claim 10, wherein said acid is applied in sufficient amount that the pH of said blended foodstuff is in the range 4.0 to 4.3.

## Patentansprüche

1. Verfahren zur Herstellung eines konservierten, verpackten Teigwaren- oder Reislebensmittels, gekennzeichnet durch eine gehemmte mikrobiologische Verunreinigung, umfassend die aufeinanderfolgenden Stufen:
Erhitzen des Lebensmittels in rohem ungekochten Zustand auf eine Temperatur von mindestens 180°F (82°C), um das Lebensmittel vollständig zu kochen und eßbar zu machen, anschließend
Zugabe einer Menge einer wäßrigen Lösung einer für Nahrungszwecke geeigneten Säure zu dem gekochten Lebensmittel, während das Lebensmittel auf einer Temperatur von mindestens etwa 180°F (82°C) gehalten wird, wobei die Menge der wäßrigen Säurelösung ausreicht, um einen pH-Wert des gekochten, angesäuerten Lebensmittels im Bereich von 3,5 bis 4,6 zu erzeugen, der bestimmt wird durch Einbringen einer 50 g Probe des angesäuerten, gekochten Lebensmittels und von 50 g destilliertem Wasser in einen Waring-Mischer oder einen anderen Mischer zum innigen Vermischen unter Bildung eines Pürees und anschließendes Beobachten des pH-Wertes des Pürees und anschließend
gegebenenfalls Überziehen des Lösungsmittels mit einem für Nahrungszwecke geeigneten Öl und anschließend
dichtes Einschließen des angesäuerten Lebensmittels in eine Sauerstoff-undurchlässige Verpackung
wodurch ein lagerungsstabiles, gekochtes Lebensmittel als verpacktes Produkt erhalten wird, das, wenn die Verpackung geöffnet wird, gekocht und eßbar ist.

2. Verfahren nach Anspruch 1, wobei die Menge der zu dem gekochten Lebensmittel zugesetzten Säure so ist, um den pH-Wert des heißen angesäuerten Lebensmittels auf einen Wert von 4,0 bis 4,3 einzustellen.

3. Verfahren nach Anspruch 1, umfassend als zusätzliche Stufe das Erhitzen des verpackten, gekochten Lebensmittels während eines Zeitraums und bei einer Temperatur, um den Inhalt der Verpackung zu sterilisieren.

4. Verfahren nach Anspruch 1, umfassend die zusätzliche Stufe der Erzeugung einer inerten Atmosphäre, umfassend Stickstoff in der Packung.

5. Verfahren zur Herstellung eines eßbaren stärkehaltigen Lebensmittels aus Teigwaren oder Reis, das gekennzeichnet ist durch eine gehemmte der mikrobiologische Verunreinigung, umfassend die aufeinanderfolgenden Stufen:
Erhitzen des Lebensmittels in rohem ungekochten Zustand auf eine Temperatur von mindestens 180°F (82°C), um das Lebensmittel vollständig zu kochen und eßbar zu machen, anschließend
Zugabe einer Menge einer wäßrigen Lösung einer für Nahrungszwecke geeigneten Säure zu dem gekochten Lebensmittel, während das Lebensmittel auf einer Temperatur von mindestens etwa 180°F (82°C) gehalten wird, wodurch der pH-Wert des heißen, angesäuerten Lebensmittels im Bereich von 3,5 bis 4,6 eingestellt wird, der bestimmt wird durch Einbringen einer 50 g Probe des angesäuerten, gekochten Lebensmittels und von 50 g destilliertem Wasser in einen Waring-Mischer oder einen anderen Mischer zum innigen Vermischen unter Bildung eines Pürees und anschließendes Beobachten des pH-Wertes des Pürees und anschließend
gegebenenfalls Überziehen des Lösungsmittels mit einem für Nahrungszwecke geeigneten Öl
wodurch ein lagerungsstabiles, gekochtes Lebensmittel erhalten wird.

6. Verfahren nach Anspruch 5, wobei die Menge der angewandten Säure ausreicht, um den pH-Wert des angesäuerten Lebensmittels auf den Bereich von 4,3 bis 4,6 einzustellen.

7. Verfahren nach Anspruch 5, wobei das Verfahren die zusätzliche Stufe des Pasteurisierens oder Sterilisierens des angesäuerten Lebensmittels durch Erhitzen auf eine Temperatur und während einer Zeit umfaßt, die ausreichen, um es zu sterilisieren.

8. Vollständig gekochtes Lebensmittel, das in einen sauerstoffundurchlässigen Behälter zur Lagerung verpackt werden kann, wobei das Lebensmittel gekennzeichnet ist durch eine gehemmte mikrobiologische Verunreinigung, bestehend im wesentlichen aus
einem vollständig gekochten, eßbaren, stärkehaltigen Lebensmittel, ausgewählt aus der Gruppe bestehend aus Reis und Teigwaren aus Weizen oder Reis,
wobei zu dem vollständig gekochten Lebensmittel, nach dem vollständigen Kochen und während es auf einer Temperatur von mindestens 180°F (82,2°C) gehalten wird, eine ausreichende Menge einer wäßrigen Lösung einer für Nahrungsmittel geeigneten Säure zugesetzt worden ist, um den pH-Wert des Lebensmittels in den Bereich von 3,5 bis 4,6 zu verringern, der bestimmt wird durch Einbringen einer 50 g Probe des angesäuerten, gekochten Lebensmittels und von 50 g destilliertem Wasser in einen Waring-Mischer oder einen anderen Mischer zum innigen Vermischen unter Bildung eines Pürees und anschließendes Messen des pH-Wertes des Pürees,
wobei das vollständig gekochte, angesäuerte Lebensmittel gegebenenfalls mit einem für Nahrungszwecke geeigneten Öl überzogen ist.

9. Lebensmittel nach Anspruch 8, das in einer sterilisierten, sauerstoffundurchlässigen Verpackung eingesiegelt ist.

10. Verpacktes Lebensmittel nach Anspruch 9, wobei eine inerte Atmosphäre aus Stickstoff in der Verpackung eingeschlossen ist.

11. Lebensmittel nach Anspruch 10, wobei die Säure in einer ausreichenden Menge angewandt worden ist, daß der pH-Wert des vermischten Lebensmittels im Bereich von 4,0 bis 4,3 liegt.

## Revendications

1. Procédé pour préparer un produit alimentaire à base de pâtes ou de riz, emballé et conservé, caractérisé en ce qu'on empêche la détérioration microbiologique par les étapes séquentielles suivantes :
- chauffer ledit produit alimentaire dans son état non cuit brut à une température d'au moins 82°C (180°F) pour cuire complètement ledit produit alimentaire et le rendre comestible, puis
- appliquer sur ledit produit alimentaire cuit une quantité d'une solution aqueuse d'un acide comestible tout en maintenant ledit produit alimentaire à une température d'au moins 82°C (180°F), ladite quantité de ladite solution acide aqueuse étant suffisante pour amener le pH dudit produit alimentaire acidifié cuit dans la plage de 3,5 à 4,6, comme déterminé en plaçant un échantillon de 50 g dudit produit alimentaire acidifié cuit et 50 g d'eau distillée dans un mélangeur de Waring ou autre mélangeur intime pour former une purée, puis en observant le pH de ladite purée, puis
- revêtir facultativement ledit produit alimentaire avec une huile comestible, et puis
- sceller ledit produit alimentaire acidifié dans un emballage étanche à l'oxygène,
d'où il résulte qu'on obtient un produit alimentaire cuit stable au stockage sous forme d'un produit emballé qui, lorsqu'on ouvre l'emballage, est cuit et comestible.

2. Procédé selon la revendication 1, dans lequel la quantité d'acide ajouté audit produit alimentaire cuit est appropriée pour ajuster le pH dudit produit alimentaire acidifié chaud à une valeur dans la plage de 4,0 à 4,3.

3. Procédé selon la revendication 1, comprenant, en tant qu'étape additionnelle, celle dans laquelle on chauffe le produit alimentaire cuit emballé pendant une durée et à une température appropriées pour stériliser le contenu dudit emballage.

4. Procédé selon la revendication 1, comprenant l'étape additionnelle dans laquelle on incorpore dans ledit emballage une atmosphère inerte contenant de l'azote.

5. Procédé pour préparer un produit alimentaire amylacé comestible à base de pâtes ou de riz, qui est caractérisé en ce qu'on empêche la détérioration microbiologique par les étapes séquentielles suivantes :
- chauffer ledit produit alimentaire dans son état non cuit brut à une température d'au moins 82°C (180°F) pour cuire complètement ledit produit alimentaire et le rendre comestible, puis
- appliquer sur ledit produit alimentaire cuit une solution aqueuse d'un acide comestible tout en maintenant ledit produit alimentaire à une température d'au moins 82°C (180°F), d'où il résulte que le pH dudit produit alimentaire acidifié chaud est ajusté à une valeur dans la plage de 3,5 à 4,6, comme déterminé en plaçant un échantillon de 50 g dudit produit alimentaire acidifié cuit et 50 g d'eau distillée dans un mélangeur de Waring ou autre mélangeur intime pour former une purée, puis en observant le pH de ladite purée, puis
- revêtir facultativement ledit produit alimentaire avec une huile comestible,
d'où il résulte qu'on obtient un produit alimentaire cuit stable au stockage.

6. Procédé selon la revendication 6, dans lequel la quantité utilisée dudit acide est suffisante pour ajuster le pH dudit produit alimentaire acidifié à une valeur dans la plage de 4,3 à 4,6.

7. Procédé selon la revendication 5, qui comprend l'étape additionnelle dans laquelle on pasteurise ou on stérilise ledit produit alimentaire acidifié en le chauffant à une température et pendant une durée suffisantes pour le stériliser.

8. Produit alimentaire complètement cuit qui est adapté pour être emballé dans un récipient étanche à l'oxygène à des fins de stockage, caractérisé en ce qu'il est à l'abri d'une détérioration microbiologique et en ce qu'il comprend essentiellement un produit alimentaire amylacé comestible complètement cuit choisi dans le groupe comprenant le riz et des pâtes alimentaires à base de froment ou de riz, ledit produit alimentaire étant revêtu, après cuisson complète, et pendant qu'il est maintenu a une température d'au moins 82°C (180°F), d'une quantité suffisante d'une solution aqueuse d'un acide comestible pour abaisser le pH dudit produit alimentaire pour qu'il tombe dans la plage de 3,5 à 4,6, comme déterminé en plaçant un échantillon de 50 g dudit produit alimentaire acidifié, avec 50 g d'eau distillée, dans un mélangeur de Waring ou autre mélangeur intime pour former une purée, puis en mesurant le pH de la purée, d'où il résulte que le produit alimentaire acidifié complètement cuit est facultativement revêtu d'une huile comestible.

9. Produit alimentaire selon la revendication 8, qui est scellé à l'intérieur d'un emballage stérilisé étanche à l'oxygène.

10. Produit alimentaire emballé selon la revendication 9, dans lequel on enferme hermétiquement une atmosphère inerte d'azote à l'intérieur dudit emballage.

11. Produit alimentaire selon la revendication 10, dans lequel ledit acide est appliqué en une quantité suffisante pour que le pH dudit produit alimentaire mélangé soit dans la plage de 4,0 à 4,3.
